# FASCICULE DE BREVET EUROPEEN

(11) **EP 1 459 265 B1**
(45) Date de publication et mention de la délivrance du brevet: **15.10.2008**
(21) Numéro de dépôt: 02791774.9
(22) Date de dépôt: 05.12.2002
(51) Int. Cl.: G07C 9/00, G07B 15/02, G06K 19/07, G06K 7/00

(54) **SYSTEME ET PROCEDE DE DETECTION DU PASSAGE D'UN INDIVIDU OU D'UN OBJET PAR UNE ENTREE-SORTIE A UN ESPACE DELIMITE**
SYSTEM ZUM ERFASSEN DES PASSIERENS EINER PERSON ODER EINES GEGENSTANDES DURCH EINEN RÄUMLICH BEGRENZTEN EINGANG/AUSGANG
SYSTEM AND METHOD FOR DETECTING AN INDIVIDUAL OR OBJECT PASSING THROUGH THE ENTRANCE-EXIT OF A DEFINED SPACE

(30) Priorité: 13.12.2001 EP 01204847
(43) Date de publication de la demande: 22.09.2004
(73) Titulaire: EM Microelectronic-Marin SA, 2074 Marin (CH)
(72) Inventeur: GYGER, Thomas, CH-2316 Les Ponts-de-Martel (CH)
(74) Mandataire: Surmely, Gérard
(86) Numéro de dépôt international: PCT/EP2002/013754
(87) Numéro de publication internationale: WO 2003/050769

(56) Documents cités:
- WO-A-00/67208
- WO-A-01/03057
- GB-A- 2 246 896
- US-A- 4 459 474

## Description

L'invention concerne la détection d'individus ou d'objets équipés d'unités électroniques portables, ou tickets électroniques, comprenant notamment des moyens de réception de signaux électromagnétiques, ces individus ou objets étant susceptibles d'entrer ou sortir d'un espace délimité par l'intermédiaire d'au moins une entrée-sortie.

Le système comporte notamment un dispositif de détection associé à cet espace délimité et comprenant notamment des moyens d'émission de signaux électromagnétiques.

La présente invention concerne plus particulièrement un tel système de détection de passage dont les moyens d'émission du dispositif de détection associé à l'espace délimité sont agencés pour émettre des premier et deuxième signaux électromagnétiques dans respectivement des première et deuxième régions de communication séparées spatialement l'une de l'autre et se recouvrant partiellement, ces première et deuxième régions traversant chacune une zone d'entrée-sortie définie par l'entrée-sortie à l'espace délimité.

Un système de détection d'individus ou d'objets présentant les caractéristiques susmentionnées est notamment exposé dans la demande internationale WO 01/03057, également au nom du présent Déposant, qui est incorporée ici par référence. On pourra également se référer à la demande de brevet européen No. 00204758.8 du 29.12.2000 intitulée « Système de détection du passage d'un individu ou objet par une entrée-sortie à un espace délimité » également au nom du présent Déposant ainsi qu'au document US-A-445974.

L'utilisation de deux champs électromagnétiques partiellement superposés permet avantageusement la détection du sens de passage, au travers de l'entrée-sortie, d'un individu ou d'un objet équipé d'une unité électronique portable. A cet effet, on prévoit des moyens de détection de sens de passage permettant de détecter le sens de passage d'un individu ou d'un objet en fonction de la réception, par l'unité électronique, des premier et deuxième signaux électromagnétiques émis respectivement dans les première et deuxième régions de communication.

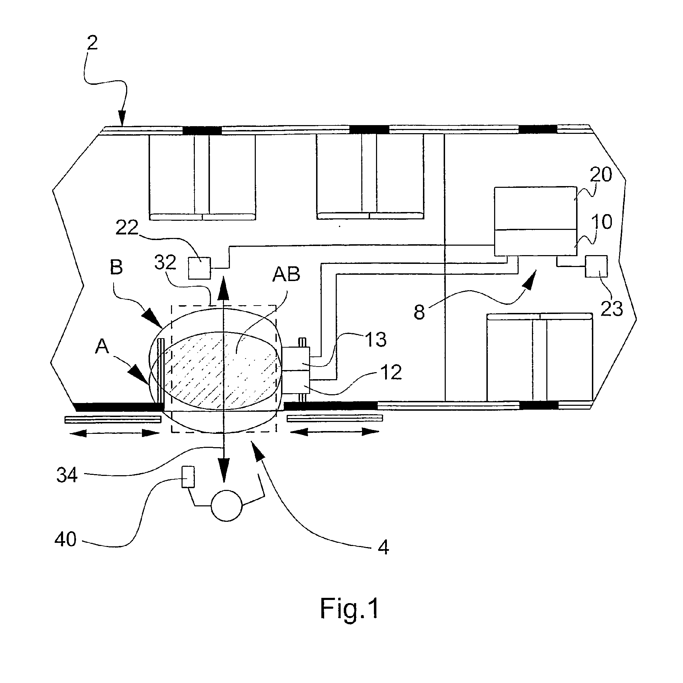

La figure 1 illustre schématiquement un exemple de mise en oeuvre d'un système de détection susmentionné. Des individus ou objets sont susceptibles d'entrer ou sortir d'un espace délimité 2 (par exemple un moyen de transport public tel qu'un wagon de voyageurs ou un autobus) au travers d'au moins une entrée-sortie, indiquée par la référence 4. Comme déjà mentionné, un dispositif de détection est associé à l'espace délimité 2 et comprend notamment des moyens d'émission 8. Ces moyens d'émission 8 comprennent un circuit électronique 10 relié à une paire d'antenne 12, 13 agencées à l'entrée-sortie 4, ce circuit électronique 10 étant lui-même raccordé à une unité centrale de traitement de données, ou ordinateur de bord 20. Les antennes 12, 13 émettent respectivement, préférablement à relativement basse fréquence (de l'ordre d'une centaine de kHz), un premier et un deuxième signal électromagnétique, désignés « a » et « b » dans la suite de la présente description, dans respectivement des première et deuxième régions de communication A, B représentées schématiquement dans la figure 1. Ces régions de communication A, B traversent une zone d'entrée-sortie 32 à l'espace délimité 2 définie par l'entrée-sortie 4. On notera que le dispositif de détection comprend par ailleurs des moyens d'émission-réception à relativement haute fréquence comprenant au moins une première antenne d'émission-réception 22, 23 connectée au circuit 10.

Les régions de communication A et B sont au moins partiellement séparées l'une de l'autre et possèdent une zone commune ou zone de recouvrement indiquée par la zone hachurée AB. En pratique, cette zone de recouvrement AB peut être importante en terme de surface et, en particulier, être plus importante que les parties non superposées des deux régions de communication A, B. Lorsqu'un individu ou un objet équipé d'une unité électronique portable, désignée 40 dans la figure 1, traverse l'entrée-sortie 4, comme illustré schématiquement par la flèche 34, ou passe dans la zone 32, celui-ci pénètre ainsi successivement dans l'une et/ou l'autre des régions de communication A, B. L'unité électronique portable 40 dont est équipé chaque individu ou objet capte ainsi une succession des premier et deuxième signaux électromagnétiques « a », « b » émis par les antennes 12, 13. L'ordre et la succession des signaux électromagnétiques reçus par l'unité électronique portable 40 permet d'identifier le sens de passage de l'individu ou de l'objet au travers de l'entrée-sortie 4.

La robustesse de cette détection de sens de passage est fortement tributaire de l'étendue de la zone de recouvrement AB entre les deux régions de communication A, B. A l'intérieur de cette zone de recouvrement AB, l'unité électronique 40 reçoit à la fois le premier signal électromagnétique « a » et le deuxième signal électromagnétique « b » émis respectivement par les antennes 12 et 13. La détermination du sens de passage de l'unité électronique 40 dans la zone de recouvrement AB ne peut donc être réalisée en se basant uniquement sur l'identification des signaux électromagnétiques reçus. Compte tenu de l'agencement spatial réel des régions de communication A, B et/ou de la vitesse de déplacement de l'unité électronique 40 au travers de l'entrée-sortie 4, il existe une relativement grande probabilité que l'unité électronique portable se trouve directement ou trop rapidement dans la zone de recouvrement AB, de sorte que le sens de passage effectif de l'unité électronique portable 40 peut ne pas être détecté correctement.

Un but de la présente invention est donc d'améliorer la robustesse de la détection du sens de passage du système susmentionné et en particulier permettre une détection fiable de ce sens de passage, quand bien même l'unité électronique portable pénètre rapidement dans la zone de recouvrement des deux régions de communication.

On notera que la demande de brevet européen No. 01200876.9 déposée le 08.03.2001, intitulée « Système de détection du passage d'individus ou d'objets par une entrée-sortie à un espace délimité », également au nom du présent Déposant, répond au but susmentionné en équipant chaque unité électronique portable (i) de moyens de mesure d'amplitude permettant de déterminer l'amplitude de réception, par cette unité électronique portable, des premier et deuxième signaux électromagnétiques, et (ii) de moyens comparateurs permettant de comparer l'amplitude de réception du premier signal électromagnétique avec l'amplitude de réception du deuxième signal électromagnétique de manière à déterminer lequel de ces deux signaux présente la plus grande amplitude.

On comprendra que cette solution nécessite l'utilisation de moyens additionnels qui ont pour inconvénient essentiel une augmentation de la complexité et des coûts de chaque unité électronique portable, complexité et coûts qu'il est préférable de maintenir aussi bas que possible. Un but additionnel de la présente invention est de proposer une solution permettant d'assurer cet objectif.

La présente invention a ainsi pour objet un système de détection du sens de passage d'un individu ou d'un objet dont les caractéristiques sont énoncées dans la revendication indépendante 1.

La présente invention concerne également un procédé de détection de sens de passage d'un individu ou d'un objet dont les caractéristiques sont énoncées dans la revendication indépendante 7.

Des modes de réalisations avantageux de la présente invention font l'objet des revendications dépendantes.

Selon l'invention, les premier et deuxième signaux électromagnétiques d'entrée sont émis sensiblement en phase à la même fréquence et comportent chacun une portion de message identique. L'un ou l'autre de ces premier et deuxième signaux électromagnétiques comprend une portion de message additionnelle identifiant la région de communication correspondante, l'émission de l'autre des premier et deuxième signaux électromagnétiques étant interrompue durant l'émission de cette portion de message additionnelle. De la sorte, la zone de recouvrement AB illustrée dans la figure 1 est « attribuée » intégralement à la première région de communication ou à la deuxième région de communication selon que la portion de message additionnelle est transmise au moyen du premier ou du deuxième signal électromagnétique.

Un avantage de la présente invention réside dans sa grande simplicité d'implémentation. En effet, la solution selon la présente invention ne nécessite aucune modification substantielle de la construction de l'unité électronique portable.

Un autre avantage de la présente invention réside dans le fait qu'elle permet la transmission d'une densité plus importante d'informations, à fréquence comparable, que les solutions envisagées jusqu'alors. En effet, les solutions antérieures qui consistaient à émettre les premier et deuxième signaux électromagnétiques en alternance ou à des fréquences différentes impliquent typiquement la transmission, pour chacun des premier et deuxième signaux électromagnétiques, d'un en-tête destiné notamment à permettre la synchronisation de l'unité électronique portable sur ces signaux en vue de leur décodage. Selon l'invention, la transmission en phase et à la même fréquence des premier et deuxième signaux électromagnétiques conduit à un gain en terme de temps de transmission équivalent à la durée de transmission d'un en-tête.

D'autres caractéristiques et avantages de la présente invention apparaîtront plus clairement à la lecture de la description détaillée qui suit, faite en référence aux dessins annexés donnés à titre d'exemples non limitatifs et dans lesquels :
- la figure 1, déjà présentée, est une illustration schématique d'un système de détection de sens de passage faisant l'objet de la présente invention ;
- la figure 2 montre schématiquement un mode de réalisation d'une unité électronique portable du système de la figure 1 ;
- la figure 3 illustre l'allure des premier et deuxième signaux électromagnétiques ainsi que leur mode d'émission selon un mode de réalisation non limitatif de la présente invention ; et
- la figure 4 illustre schématiquement l'attribution de la zone de recouvrement des régions de communication résultant du mode de réalisation de la figure 3.

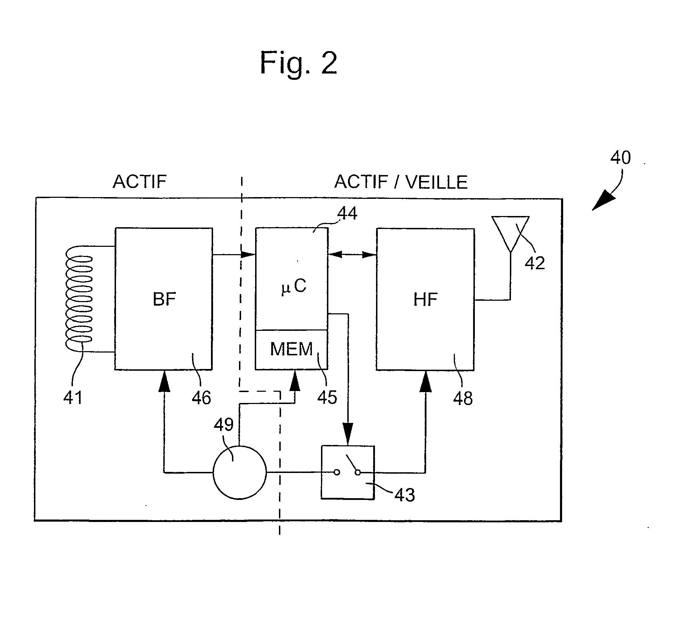

La figure 2 montre schématiquement un mode de réalisation non limitatif d'une unité portable 40 du système de détection de la figure 1. Cette unité électronique portable comporte un bloc de réception basse fréquence 46 et une antenne 41 pour recevoir les données transmises au moyen du ou des premiers signaux électromagnétiques basse fréquence « a », « b » émis par les moyens d'émission 8, 12, 13 du système, ainsi qu'un bloc d'émission-réception haute-fréquence 48 et une antenne 42 pour échanger des données avec des moyens d'émission-réception haute fréquence (22, 23 dans la figure 1) associés à l'espace délimité 10 au moyen d'un signal électromagnétique haute fréquence (par exemple de l'ordre d'une centaine de MHz ou plus). Ce signal électromagnétique haute fréquence sert notamment à la transmission d'informations relatives au sens de passage de l'unité électronique portable 40 au travers de l'entrée-sortie 4.

Une unité de traitement de données 44 (tel un micro-contrôleur ou microprocesseur) associée à une mémoire 45 est connectée aux blocs de réception basse fréquence 46 et d'émission-réception haute fréquence 48. L'unité électronique portable 40 est par ailleurs alimentée par une source d'alimentation en énergie électrique 49 telle une pile ou autre batterie. Préférablement, l'unité de traitement de données 44 peut être mise en mode de veille afin d'économiser de l'énergie. De même, le bloc d'émission-réception haute fréquence 48 est susceptible d'être désactivé ou mis en mode de veille par l'unité de traitement de données 44 comme schématisé par le moyen d'interruption 43. Ainsi, seul le bloc de réception basse fréquence 46 est alimenté en permanence ou quasi-permanence, celui-ci activant l'unité de traitement de données 44 dès lors qu'un signal électromagnétique basse fréquence (« a » ou « b ») émis par les moyens d'émission 8, 10, 12, 13 est reçu par ce bloc de réception 46.

On ne s'attardera pas plus longuement sur la description de la structure de l'unité électronique portable et du système de détection. On pourra à ce titre se référer amplement à la demande internationale WO 01/03057 et à la demande de brevet européen No. 00204758.8 du 29.12.2000 déjà citées en préambule.

On notera encore que la détermination du sens de passage est opérée en identifiant au moins lequel des premier et deuxième signaux électromagnétiques « a », « b » a été reçu en premier et en dernier. On comprendra par ailleurs que la détection du sens de passage de l'unité électronique portable 40 au travers de l'entrée-sortie peut être réalisée entièrement par l'unité électronique portable, auquel cas l'unité de traitement de données 44 de l'unité électronique portable 40 remplit la fonction des moyens de détection de sens de passage et détermine l'information de sens de passage. Cette information de sens de passage est ensuite transmise au dispositif de détection associé à l'espace délimité 2, typiquement au moyen d'un signal haute fréquence comme déjà mentionné plus haut. Cette transmission peut être effectuée directement après ou au terme d'un intervalle de temps déterminé faisant suite à la sortie de l'unité électronique portable de la première ou deuxième région de communication.

Alternativement, l'unité électronique portable peut se contenter de transmettre uniquement une indication identifiant au moins lequel des premier et deuxième signaux électromagnétiques « a », « b » a été reçu en premier et en dernier, le traitement de ces données en vue de la détermination du sens de passage étant effectué par le dispositif de détection associé à l'espace délimité.

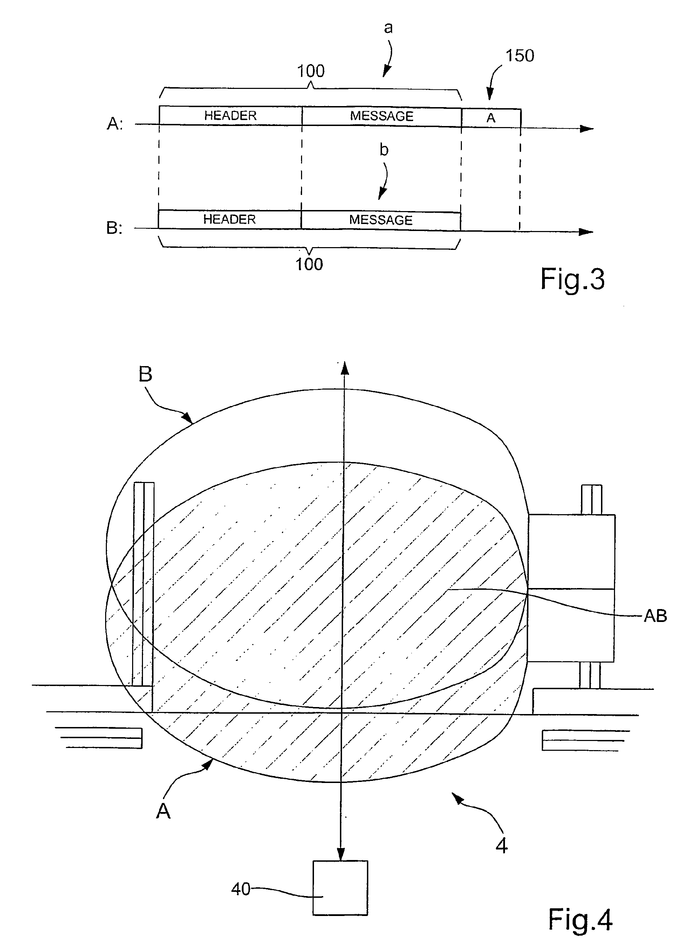

En référence à la figure 3, on va maintenant décrire l'allure des premier et deuxième signaux électromagnétiques ainsi que leur mode d'émission selon un mode de réalisation non limitatif de la présente invention. Ainsi, selon l'invention, les premier et deuxième signaux électromagnétiques « a », « b » sont émis en phase à la même fréquence et comportent chacun une portion de message identique, désignée 100 dans la figure 3. Cette portion de message 100 comporte, d'une part, un en-tête (« HEADER ») destiné notamment à permettre la synchronisation de l'unité électronique portable. La portion de message 100 comporte, d'autre part, un corps de message (« MESSAGE ») contenant notamment des indications concernant la date et l'heure de passage par l'entrée à l'espace délimité où le signal est émis, l'identité de l'espace délimité considéré (par exemple une identification du véhicule, du wagon de chemin de fer ou encore de la rame de métro, etc.), ainsi que d'autres indications complémentaires telle l'identité de la station ou de l'arrêt auquel est stationné le véhicule de transport ou encore des paramètres de configuration de l'unité électronique portable.

Selon l'invention, l'un des premier et deuxième signaux électromagnétiques comprend une portion de message additionnelle identifiant l'une des régions de communication A, B, l'émission de l'autre des premier et deuxième signaux électromagnétiques étant interrompue durant l'émission de cette portion de message additionnelle. Dans l'exemple de la figure 3, le premier signal électromagnétique « a » comporte ainsi une portion de message additionnelle, repérée par la référence numérique 150, identifiant la première région de communication A. L'émission du deuxième signal électromagnétique « b » est interrompue durant l'émission de cette portion de message additionnelle 150.

Etant donné que les portions de message 100 des premier et deuxième signaux électromagnétiques « a », « b » sont identiques et que seul le premier signal électromagnétique « a » (ou alternativement le deuxième signal électromagnétique « b ») comprend la portion de message additionnelle 150, on comprendra aisément qu'il n'en résulte aucune interférence entre les deux signaux électromagnétiques « a » et « b ».

Comme illustré schématiquement à la figure 4, la solution spécifique de la figure 3 a pour résultat « l'attribution » de la zone de recouvrement AB des deux régions de communications A et B à la région de communication A, située vers l'extérieur de l'espace délimité 2. Une unité électronique portable 40 se trouvant dans la région de communication A, y compris dans la zone de recouvrement AB, reçoit ainsi un message comprenant à la fois la portion de message 100 et la portion de message additionnelle 150 identifiant la région de communication A. L'unité électronique portable 40 traite alors cette information comme indiquant qu'elle se trouve dans la région de communication A. Dès lors que l'unité électronique portable 40 se trouve dans la région de communication B, en dehors de la zone de recouvrement AB, la portion de message additionnelle 150 n'est plus reçue par cette unité électronique portable 40. En conséquence, l'unité électronique portable 40 traite cette information comme indiquant qu'elle se trouve dans la région de communication B.

En pratique, il sera judicieux d'agencer et disposer les antennes d'émission des signaux électromagnétiques basse fréquence de sorte que l'on maximise et optimise la réception de chaque signal électromagnétique. Dans le cas d'espèce, il conviendra ainsi de maximiser et optimiser l'étendue de la région de communication B, en dehors de la zone de recouvrement AB, ceci de manière à assurer qu'une unité électronique portable traversant l'entrée-sortie reçoive au moins une fois le signal électromagnétique émis dans la région de communication B. Cette optimisation dépend notamment de la fréquence d'émission des signaux électromagnétiques « a », « b », de la durée des messages transmis, ainsi que de la vitesse de passage de l'unité électronique portable au travers de l'entrée.

On comprendra bien évidemment que l'on pourra choisir d'attribuer la zone de recouvrement AB à la région de communication B au lieu de la région de communication A comme illustré en référence aux figures 3 et 4. Cette attribution pourrait même changer au cours du temps si cela s'avère nécessaire. A titre d'exemple, dans la demande de brevet européen No. 00204758.8 du 29.12.2000 déjà citée en préambule, il est prévu de modifier les signaux électromagnétiques d'entrée après fermeture de l'entrée-sortie, et en particulier modifier le premier signal électromagnétique « a » émis dans la région de communication A située vers l'extérieur de l'espace délimité 2 pour devenir identique au deuxième signal électromagnétique « b ». Dans le cas d'espèce, ceci reviendrait à interrompre l'émission de la portion de message additionnelle 150 après la fermeture de l'entrée-sortie.

On comprendra finalement que diverses modifications et/ou améliorations évidentes pour l'homme du métier peuvent être apportées aux modes de réalisation décrits dans la présente description sans sortir du cadre de l'invention défini par les revendications annexées. On comprendra aisément que la portion de message additionnelle 150 permettant d'attribuer la zone de recouvrement AB à l'une ou l'autre des régions de communication A, B pourrait alternativement être transmise, non au terme du signal électromagnétique comme illustré dans la figure 3, mais à n'importe quel autre instant. La portion de message 100 pourrait ainsi être interrompue pour permettre la transmission de la portion de message additionnelle 150, l'émission de l'autre signal électromagnétique étant bien évidemment toujours interrompue durant cette période.

## Revendications

1. Système de détection du passage d'un individu ou d'un objet par une entrée-sortie (4) à un espace délimité (2) comprenant :
- un dispositif de détection (10, 12, 13, 20, 22, 23) associé au dit espace délimité (2) et comprenant des moyens d'émission (8) pour émettre des premier et deuxième signaux électromagnétiques (a, b) dans respectivement des première et deuxième régions de communication (A, B) séparées spatialement l'une de l'autre et se recouvrant partiellement, ces première et deuxième régions (A, B) traversant chacune une zone d'entrée-sortie (32) définie par ladite entrée-sortie (4) ;
- une unité électronique portable (40) destinée à équiper ledit individu ou objet et comprenant des moyens de réception (41, 46) desdits premier et deuxième signaux électromagnétiques (a, b) émis par lesdits moyens d'émission (8) ; et
- des moyens de détection du sens de passage, au travers de ladite entrée-sortie (4), d'un individu ou d'un objet équipé d'une unité électronique portable (40) en fonction de la réception desdits premier et deuxième signaux électromagnétiques (a, b),
**caractérisé en ce que** lesdits premier et deuxième signaux électromagnétiques (a, b) sont émis sensiblement en phase à la même fréquence et comportent chacun une portion de message identique (100), l'un (a ; b) desdits premier et deuxième signaux électromagnétiques comprenant une portion de message additionnelle (150) identifiant la région de communication correspondante (A, B), l'émission de l'autre (b; a) desdits premier et deuxième signaux électromagnétiques étant interrompue durant l'émission de ladite portion de message additionnelle (150).

2. Système de détection selon la revendication 1, **caractérisé en ce que** lesdites première et deuxième régions de communication (A, B) sont respectivement agencées vers l'extérieur et vers l'intérieur dudit espace délimité (2) et **en ce que** ledit premier signal électromagnétique (a) comporte ladite portion de message additionnelle (150) identifiant la première région de communication (A).

3. Système de détection selon la revendication 1, **caractérisé en ce que** lesdites première et deuxième régions de communication (A, B) sont respectivement agencées vers l'extérieur et vers l'intérieur dudit espace délimité (2) et **en ce que** ledit deuxième signal électromagnétique (b) comporte ladite portion de message additionnelle (150) identifiant la deuxième région de communication (B).

4. Système de détection selon l'une quelconque des revendications 1 à 3, **caractérisé en ce que** lesdits moyens de détection de sens de passage comportent des moyens de traitement (20) desdits premier et deuxième signaux électromagnétiques (a, b) agencés dans ledit dispositif de détection associé à l'espace délimité.

5. Système de détection selon l'une quelconque des revendications 1 à 3, **caractérisé en ce que** lesdits moyens de détection de sens de passage comportent des moyens de traitement (44) desdits premier et deuxième signaux électromagnétiques (a, b) agencés dans ladite unité électronique portable (40).

6. Système de détection selon la revendication 2, **caractérisé en ce que** l'émission de ladite portion de message additionnelle (150) est interrompue après une fermeture de ladite entrée-sortie (4).

7. Procédé de détection du passage d'un individu ou d'un objet par une entrée-sortie (4) à un espace délimité (2) comprenant :
- l'émission de premier et deuxième signaux électromagnétiques (a, b) dans respectivement des première et deuxième régions de communication (A, B) séparées spatialement l'une de l'autre et se recouvrant partiellement, ces première et deuxième régions (A, B) traversant chacune une zone d'entrée-sortie (32) définie par ladite entrée-sortie (4) ;
- la réception, par une unité électronique portable (40) équipant ledit individu ou objet, du premier signal électromagnétique (a) et/ou du deuxième signal électromagnétique (b) ; et
- la détection du sens de passage, au travers de ladite entrée-sortie (4), dudit individu ou objet équipé de l'unité électronique portable (40) en fonction de la réception desdits premier et deuxième signaux électromagnétiques (a, b),
ce procédé étant **caractérisé en ce que** lesdits premier et deuxième signaux électromagnétiques (a, b) sont émis sensiblement en phase à la même fréquence et comportent chacun une portion de message identique (100), l'un (a ; b) desdits premier et deuxième signaux électromagnétiques comprenant une portion de message additionnelle (150) identifiant la région de communication correspondante (A, B), l'émission de l'autre (b ; a) desdits premier et deuxième signaux électromagnétiques étant interrompue durant l'émission de ladite portion de message additionnelle (150).

8. Procédé de détection selon la revendication 7, **caractérisé en ce que** ladite détection du sens de passage au travers de l'entrée-sortie (4) comprend la détermination de la région de communication correspondante (A ; B) en fonction de la réception de ladite portion de message additionnelle (150).

9. Procédé de détection selon la revendication 8, **caractérisé en ce que** ladite détection du sens de passage au travers de l'entrée-sortie (4) comprend la transmission, de ladite unité électronique portable (40) vers un dispositif de détection (10, 20) associé au dit espace délimité (2), d'une information comprenant au moins une identification de la région de communication correspondant au premier des signaux électromagnétiques reçus et de la région de communication correspondant au dernier des signaux électromagnétiques reçus.

10. Procédé de détection selon la revendication 8, **caractérisé en ce que** ladite détection du sens de passage au travers de l'entrée-sortie (4) comprend la transmission, de ladite unité électronique portable (40) vers un dispositif de détection (10, 20) associé au dit espace délimité (2), d'une information de sens de passage, cette information de sens de passage étant déterminée par ladite unité électronique portable au moins sur la base d'une identification de la région de communication correspondant au premier des signaux électromagnétiques reçus et de la région de communication correspondant au dernier des signaux électromagnétiques reçus.

11. Procédé selon la revendication 9 ou 10, **caractérisé en ce que** ladite transmission d'information, de l'unité électronique portable (40) vers ledit dispositif de détection associé à l'espace délimité (10, 20), est effectuée directement après ou au terme d'un intervalle de temps déterminé faisant suite à la sortie de l'unité électronique portable de ladite première ou deuxième région de communication.

12. Procédé selon l'une quelconque des revendications 9 à 11, **caractérisé en ce que** ladite transmission d'information, de l'unité électronique portable (40) vers ledit dispositif de détection (10, 20) associé à l'espace délimité, est effectuée à une fréquence relativement haute, supérieure à la fréquence d'émission desdits premier et deuxième signaux électromagnétiques.

13. Procédé de détection selon l'une quelconque des revendications 7 à 12, **caractérisé en ce que** lesdites première et deuxième régions de communication (A, B) sont respectivement agencées vers l'extérieur et vers l'intérieur dudit espace délimité (2) et **en ce que** ledit premier signal électromagnétique (a) comporte ladite portion de message additionnelle (150) identifiant la première région de communication (A), l'émission de ladite portion de message additionnelle (150) étant interrompue après une fermeture de ladite entrée-sortie (4).

## Claims

1. System for detecting the passage of a person or an object through an entry-exit (4) of a delimited space (2), the system comprising:
- a detection device (10, 12, 13, 20, 22, 23) associated with said delimited space (2) and comprising transmission means (8) for transmitting first and second electromagnetic signals (a, b) in respective spatially separate and partially overlapping first and second communication regions (A, B) each crossing an entry-exit zone (32) defined by said entry-exit (4);
- a portable electronic unit (40) adapted to equip said person or object and comprising receiver means (41, 46) for receiving said first and second electromagnetic signals (a, b) transmitted by said transmission means (8); and
- means for detecting the direction of passage through said entry-exit (4) of a person or an object equipped with a portable electronic unit (40) as a function of the reception of said first and second electromagnetic signals (a, b),
**characterized in that** said first and second electromagnetic signals (a, b) are transmitted substantially in phase at the same frequency and each comprises an identical message portion (100), one of said first and second electromagnetic signals (a; b) further comprising an additional message portion (150) identifying the corresponding communication region (A, B), transmission of the other of said first and second electromagnetic signals (b; a) being interrupted during the transmission of said additional message portion (150).

2. Detection system according to claim 1, **characterized in that** said first and second communication regions (A, B) are respectively toward the exterior and toward the interior of said delimited space (2) and said first electromagnetic signal (a) comprises said additional message portion (150) identifying the first communication region (A).

3. Detection system according to claim 1, **characterized in that** said first and second communication regions (A, B) are respectively toward the exterior and toward the interior of said delimited space (2) and said second electromagnetic signal (b) comprises said additional message portion (150) identifying the second communication region (B).

4. Detection system according to any one of claims 1 to 3, **characterized in that** said passage direction detection means comprise means (20) in said detection device associated with the delimited space for processing said first and second electromagnetic signals (a, b).

5. Detection system according to any one of claims 1 to 3, **characterized in that** said passage direction detection means comprise means (44) in said portable electronic unit (40) for processing said first and second electromagnetic signals (a, b).

6. Detection system according to claim 2, **characterized in that** the transmission of said additional message portion (150) is interrupted after closure of said entry-exit (4).

7. Method of detecting the passage of a person or an object through an entry-exit (4) of a delimited space (2), the method comprising.
- transmitting first and second electromagnetic signals (a, b) in respective spatially separate and partially overlapping first and second communication regions (A, B) each crossing an entry-exit zone (32) defined by said entry-exit (4);
- receiving said first electromagnetic signal (a) and/or said second electromagnetic signal (b) by means of a portable electronic unit (40) adapted to equip said person or object; and
- detecting the direction of passage through said entry-exit (4) of a person or an object equipped with the portable electronic unit (40) as a function of the reception of said first and second electromagnetic signals (a, b),
which method is **characterized in that** said first and second electromagnetic signals (a, b) are transmitted substantially in phase at the same frequency and each comprises an identical message portion (100), one of said first and second electromagnetic signals (a; b) further comprising an additional message portion (150) identifying the corresponding communication region (A, B), transmission of the other of said first and second electromagnetic signals (b; a) being interrupted during the transmission of said additional message portion (150).

8. Method according to claim 7, **characterized in that** detecting the direction of passage through the entry-exit (4) comprises determining the corresponding communication region (A; B) as a function of the reception of said additional message portion (150).

9. Detection method according to claim 8, **characterized in that** detecting the direction of passage through the entry-exit (4) comprises transmitting from said portable electronic unit (40) to a detection device (10, 20) associated with said delimited space (2) information comprising at least an identification of the communication region corresponding to the first of the electromagnetic signals received and the communication region corresponding to the last of the electromagnetic signals received.

10. Detection method according to claim 8, **characterized in that** detecting the direction of passage through the entry-exit (4) comprises transmitting from said portable electronic unit (40) to a detection device (10, 20) associated with said delimited space (2) passage direction information determined by said portable electronic unit at least on the basis of an identification of the communication region corresponding to the first of the electromagnetic signals received and the communication region corresponding to the last of the electromagnetic signals received.

11. Method according to claim 9 or claim 10, **characterized in that** said transmission of information from the portable electronic unit (40) to said detection device (10, 20) associated with the delimited space is effected directly after or at the end of a particular time interval following the exit of the portable electronic unit from said first or second communication region.

12. Method according to any one of claims 9 to 11, **characterized in that** said information is transmitted from the portable electronic unit (40) to said detection device (10, 20) associated with the delimited space at a relatively high frequency that is higher than the transmission frequency of said first and second electromagnetic signals.

13. Detection method according to any one of claims 7 to 12, **characterized in that** said first and second communication regions (A, B) are respectively toward the exterior and toward the interior of said delimited space (2) and said first electromagnetic signal (a) comprises said additional message portion (150) identifying the first communication region (A), the transmission of said additional message portion (150) being interrupted after closure of said entry-exit (4).

## Patentansprüche

1. System zum Erfassen des Durchgangs einer Person oder eines Objekts durch einen Eingang/Ausgang (4) in einen bzw. aus einem begrenzten Raum (2), das umfasst:
- eine Erfassungsvorrichtung (10, 12, 13, 20, 22, 23), die dem begrenzten Raum (2) zugeordnet ist und Sendemittel (8) enthält, um ein erstes und ein zweites elektromagnetisches Signal (a, b) in einen ersten bzw. einen zweiten Kommunikationsbereich (A, B), die räumlich voneinander getrennt sind und sich teilweise überdecken, zu senden, wobei dieser erste und dieser zweite Bereich (A, B) jeweils durch eine durch den Eingang/Ausgang (4) definierte Eingangs-/Ausgangszone (32) verlaufen;
- eine tragbare elektronische Einheit (40), mit der die Person oder das Objekt auszurüsten ist und die Mittel (41, 46) zum Empfangen des ersten und des zweiten elektromagnetischen Signals (a, b), die von den Sendemitteln (8) gesendet werden, enthält, und
- Mittel zum Erfassen der Durchgangsrichtung durch den Eingang/Ausgang (4) einer Person oder eines Objekts, die bzw. das mit einer tragbaren elektronischen Einheit (40) ausgerüstet ist, in Abhängigkeit vom Empfang des ersten und des zweiten elektromagnetischen Signals (a, b),
**dadurch gekennzeichnet, dass** das erste und das zweite elektromagnetische Signal (a, b) im Wesentlichen in Phase mit derselben Frequenz gesendet werden und jeweils einen gleichen Nachrichtenabschnitt (100) aufweisen, wobei eines (a; b) des ersten und des zweiten elektromagnetischen Signals einen zusätzlichen Nachrichtenabschnitt (150) enthält, der den entsprechenden Kommunikationsbereich (A, B) bezeichnet, wobei das Senden des Anderen (b; a) des ersten und des zweiten elektromagnetischen Signals während des Sendens des zusätzlichen Nachrichtenabschnitts (150) unterbrochen wird.

2. Erfassungssystem nach Anspruch 1, **dadurch gekennzeichnet, dass** der erste und der zweite Kommunikationsbereich (A, B) in Auswärtsrichtung bzw. in Einwärtsrichtung des begrenzten Raums (2) angeordnet sind und dass das erste elektromagnetische Signal (a) den zusätzlichen Nachrichtenabschnitt (150) enthält, der den ersten Kommunikationsbereich (A) bezeichnet.

3. Erfassungssystem nach Anspruch 1, **dadurch gekennzeichnet, dass** der erste und der zweite Kommunikationsbereich (A, B) in Auswärtsrichtung bzw. in Einwärtsrichtung des begrenzten Raums (2) angeordnet sind und dass das zweite elektromagnetische Signal (b) den zusätzlichen Nachrichtenabschnitt (150) enthält, der den zweiten Kommunikationsbereich (B) bezeichnet.

4. Erfassungssystem nach einem der Ansprüche 1 bis 3, **dadurch gekennzeichnet, dass** die Mittel zum Erfassen der Durchgangsrichtung Mittel (20) zum Verarbeiten des ersten und des zweiten elektromagnetischen Signals (a, b) umfassen, die in der dem begrenzten Raum zugeordneten Erfassungsvorrichtung angeordnet sind.

5. Erfassungssystem nach einem der Ansprüche 1 bis 3, **dadurch gekennzeichnet, dass** die Mittel zum Erfassen der Durchgangsrichtung Mittel (44) zum Verarbeiten des ersten und des zweiten elektromagnetischen Signals (a, b), die in der tragbaren elektronischen Einheit (40) angeordnet sind, umfassen.

6. Erfassungssystem nach Anspruch 2, **dadurch gekennzeichnet, dass** das Senden des zusätzlichen Nachrichtenabschnitts (150) nach einem Schließen des Eingangs/Ausgangs (4) unterbrochen wird.

7. Verfahren zum Erfassen des Durchgangs einer Person oder eines Objekts durch einen Eingang/Ausgang (4) in einen bzw. aus einem begrenzten Raum (2), das umfasst:
- Senden eines ersten und eines zweiten elektromagnetischen Signals (a, b) in einen ersten bzw, einen zweiten Kommunikationsbereich (A, B), die räumlich voneinander getrennt sind und sich teilweise überdecken, wobei dieser erste und dieser zweite Bereich (A, B) jeweils durch eine Eingangs/Ausgangszone (32), die durch den Eingang/Ausgang (4) definiert ist, verlaufen;
- Empfangen des ersten elektromagnetischen Signals (a) und/oder des zweiten elektromagnetischen Signals (b) durch eine tragbare elektronische Einheit (40), mit der die Person oder das Objekt ausgerüstet ist; und
- Erfassen der Durchgangsrichtung durch den Eingang/Ausgang (4) der Person oder des Objekts, die bzw. das mit der tragbaren elektronischen Einheit (40) ausgerüstet ist, in Abhängigkeit vom Empfang des ersten und des zweiten elektromagnetischen Signals (a, b),
wobei dieses Verfahren **dadurch gekennzeichnet ist, dass** das erste und das zweite elektromagnetische Signal (a, b) im Wesentlichen in Phase mit derselben Frequenz gesendet werden und jeweils einen gleichen Nachrichtenabschnitt (100) aufweisen, wobei eines (a; b) des ersten und des zweiten elektromagne-tischen Signals einen zusätzlichen Nachrichtenabschnitt (150) enthält, der den entsprechenden Kommunikationsbereich (A, B) bezeichnet, wobei das Senden des Anderen (b; a) des ersten und des zweiten elektromagnetischen Signals während des Sendens des zusätzlichen Nachrichtenabschnitts (150) unterbrochen wird.

8. Erfassungsverfahren nach Anspruch 7, **dadurch gekennzeichnet, dass** das Erfassen der Durchgangsrichtung durch den Eingang/Ausgang (4) das Bestimmen des entsprechenden Kommunikationsbereichs (A; B) in Abhängigkeit vom Empfang des zusätzlichen Nachrichtenabschnitts (150) umfasst.

9. Erfassungsverfahren nach Anspruch 8, **dadurch gekennzeichnet, dass** die Erfassung der Durchgangsrichtung durch den Eingang/Ausgang (4) das Übertragen einer Information, die wenigstens eine Identifizierung des Kommunikationsbereichs, der dem ersten der empfangenen elektromagnetischen Signale entspricht, und des Kommunikationsbereichs, der dem letzten der empfangenen elektromagnetischen Signale entspricht, enthält, von der tragbaren elektronischen Einheit (40) zu einer Erfassungsvorrichtung (10, 20), die dem begrenzten Raum (2) zugeordnet ist, umfasst.

10. Erfassungsverfahren nach Anspruch 8, **dadurch gekennzeichnet, dass** die Erfassung der Durchgangsrichtung durch den Eingang/Ausgang (4) die Übertragung einer Information bezüglich der Durchgangsrichtung von der tragbaren elektronischen Einheit (40) zu einer Erfassungsvorrichtung (10, 20), die dem begrenzten Raum (2) zugeordnet ist, umfasst, wobei diese Durchgangsrichtungsinformation durch die tragbare elektronische Einheit wenigstens anhand einer Identifizierung des Kommunikationsbereichs, der dem ersten der empfangenen elek-tromagnetischen Signale entspricht, und des Kommunikationsbereichs, der dem letzten der empfangenen elektromagnetischen Signale entspricht, bestimmt wird.

11. Verfahren nach Anspruch 9 oder 10, **dadurch gekennzeichnet, dass** die Übertragung der Information von der tragbaren elektronischen Einheit (40) zu der dem begrenzten Raum (10, 20) zugeordneten Erfassungsvorrichtung direkt nachdem die tragbare elektronische Einheit den ersten oder den zweiten Kommunikationsbereich verlassen hat oder am Ende eines bestimmten Zeitintervalls, das dem Verlassen folgt, erfolgt.

12. Verfahren nach einem der Ansprüche 9 bis 11, **dadurch gekennzeichnet, dass** die Übertragung der Information von der tragbaren elektronischen Einheit (40) zu der dem begrenzten Raum zugeordneten Erfassungsvorrichtung (10, 20) mit einer verhältnismäßig hohen Frequenz, die höher als die Sendefrequenz des ersten und des zweiten elektromagnetischen Signals ist, erfolgt.

13. Erfassungsverfahren nach einem der Ansprüche 7 bis 12, **dadurch gekennzeichnet, dass** der erste und der zweite Kommunikationsbereich (A, B) in Auswärtsrichtung bzw. in Einwärtsrichtung des begrenzten Raums (2) angeordnet sind und dass das erste elektromagnetische Signal (a) den zusätzlichen Nachrichtenabschnitt (150) aufweist, der den ersten Kommunikationsbereich (A) bezeichnet, wobei das Senden des zusätzlichen Nachrichtenabschnitts (150) nach einem Schließen des Eingangs/Ausgangs (4) unterbrochen wird.
